# EUROPÄISCHE PATENTSCHRIFT

(11) **EP 0 376 356 B1**
(45) Veröffentlichungstag und Bekanntmachung des Hinweises auf die Patenterteilung: **09.06.1993**
(21) Anmeldenummer: 89201886.2
(22) Anmeldetag: 13.07.1989
(51) Int. Cl.: B01D 53/08, B01D 53/34, B01J 8/12

(54) **Verfahren und Vorrichtung zum Abtrennen unerwünschter Bestandteile aus einem Abgas**
Method and apparatus for removing undesirable components from an exhaust gas
Méthode et procédé pour séparer des composants indésirables d'un gaz d'échappement

(30) Priorität: 30.12.1988 DE 3844422
(43) Veröffentlichungstag der Anmeldung: 04.07.1990
(73) Patentinhaber: STEAG AG, D-45128 Essen (DE)
(72) Erfinder: Brüggendick, Hermann Dr.-Ing, D-4224 Hünxe (DE)

(56) Entgegenhaltungen:
- EP-A- 0 193 135
- WO-A-88/06482
- DE-A- 2 626 939
- DE-A- 3 523 417
- DE-A- 3 619 496
- DE-A- 3 720 045
- US-A- 2 684 729
- PATENT ABSTRACTS OF JAPAN, Band 7, Nr. 19 (C-147)[1164], 25. Januar 1983; & JP-A-57 177 330 (BABCOCK HITACHI K.K.) 01-11-1982
- PATENT ABSTRACTS OF JAPAN, Band 5, Nr. 128 (C-67)[800], 18. August 1981; & JP-A-56 62 522 (UNITIKA K.K.) 28-05-1981
- PATENT ABSTRACTS OF JAPAN, Band 2, Nr. 48, 31. März 1978, Seite 25 C 78; & JP-A-53 4768 (KAWASAKI JUKOGYO K.K.) 17-01-1978
- PATENT ABSTRACTS OF JAPAN, Band 1, Nr. 102, 10. September 1977, Seite 2192 C 77; & JP-A-52 60 274 (NIPPON KOKAN K.K.) 18-05-1977

## Beschreibung

Die Erfindung bezieht sich auf ein Verfahren zum Abtrennen unerwünschter Bestandteile aus einem Abgas durch Adsorption an einem stückigen oder körnigen Adsorptionsmittel, wobei das zu behandelnde Abgas wenigstens einen mit wenigstens einer Adsorptionsmittelschicht gefüllten Reaktionsraum durchströmt.

Ferner bezieht sich die Erfindung auf eine Vorrichtung zum Durchführen dieses Verfahrens.

Die DE-A-26 26 939 zeigt ein Verfahren der gattungsgemäßen Art, bei dem das Abgas innerhalb des Reaktionsraums durch zwei parallel zueinander wandernde Schichten geleitet und das Adsorptionsmittel in der abströmseitigen Schicht mit höherer Geschwindigkeit bewegt und niedriger beladen wird als in der Schicht auf der Anströmseite. Mit diesem bekannten Verfahren soll eine möglichst weitgehende Reinigung des Abgases erfolgen, da dem Abgas an der Abströmseite noch genügend frisches Adsorbens angeboten wird. Andererseits muß in einer relativ dicken Schicht an der Abströmseite laufend Adsorbens abgezogen und regeneriert werden, das nur sehr begrenzt ausgenutzt ist. Die Reaktionskammer ist durch vertikale Trennwände unterteilt. Die einzelnen Abteile werden aus einer zentralen Einfüllöffnung mit Adsorptionsmittel versorgt und haben den einzelnen Schichten zugeordnete Abzugsöffnungen bzw. -trichter.

Aus der DE-C-34 27 905 ist es bekannt, die Adsorbens-Partikelströmung durch Einbauten über den Querschnitt des Wanderbetts zu vergleichmäßigen.

Die DE-A-3 523 417 zeigt einen Wanderbettreaktor mit einem Verteilerboden aus miteinander verbundenen Trichtern am Kopfteil, bei welchem das Abgas von unten in das Wanderbett geführt wird
Bei bekannten Adsorptionsapparaten können wesentliche Teile insbesondere des Schüttkegels im Kopfbereich und des Abzugskegels im Fußbereich des Reaktors vom querströmenden Abgas nicht oder nur ungenügend erreicht werden. Die Folge sind hot spots (Wärmekonzentrationen) bis hin zu Brandherden im Kopfbereich und Kondensatansammlungen, verbunden mit Partikelverbackungen im Fußbereich des Reaktors.

Der Erfindung liegt die Aufgabe zugrunde, für eine bessere Durchströmung des Adsorptionsmittelbetts mit dem zu behandelnden Abgas zu sorgen und betriebliche Störungen insbesondere in den kritischen Kopf- und Abzugsbereichen des Adsorbers zu vermeiden.

Ausgehend von einem Verfahren der eingangs genannten Art, sieht die Erfindung zur Lösung dieser Aufgabe vor, daß das Adsorptionsmittel durch mehrere getrennte Aufgabe- und Abzugstrichter rasterförmig verteilt in den Reaktionsraum eingeführt und aus diesem abgezogen wird und daß das Abgas teilweise von der Seite aus quer zu der Adsorptionsmittelschicht und teilweise von oben über die von den Aufgabetrichtern gebildeten Schüttkegel eingeleitet und durch den Reaktionsraum geführt wird, so daß das Adsorptionsmittel in allen Zonen des Reaktionsraums im wesentlichen gleichmäßig an der Adsorption teilnimmt. Dabei ist es besonders vorteilhaft, daß zum einen das Abgas durch wenigstens zwei getrennte Adsorptionsschichten geleitet wird und daß zum anderen das Abgas teilweise von oben in den Reaktionsraum eingeführt wird.

Vorrichtungsmäßig besteht die Lösung der o.g. Aufgabe erfindungsgemäß darin, daß die Aufgabemittel durch ein Raster von mehreren neben- und hintereinander angeordneten Aufgabetrichtern und die Abzugsmittel durch ein weiteres Raster von neben- und hintereinander angeordneten Abzugstrichtern gebildet sind und daß sowohl mindestens an einer Seite als auch im Kopfbereich des Reaktionsraums Fluiddurchlässe vorgesehen sind.

Durch Gliederung der Aufgabe- und Abzugsbereiche des Adsorptionsmittels in eine Vielzahl kegelförmiger Teilbereiche werden die für die Abgasströmung schwer erreichbaren Materialtaschen in den Kopf- und Fußbereichen des Reaktors minimiert. Außerdem wird die Partikelströmung und Schüttgutmechaanik innerhalb des Reaktionsraums sowohl beim Aufgeben als auch beim Abziehen des Adsorptionsmittels durch Gliederung in Teilströme verbessert. Obwohl die Hauptströmung des Abgases quer zur Adsorptionsmittelsäule gerichtet ist, wird frisches Adsorbens im Kopfbereich des Reaktors durch das dort in den Reaktionsraum eingeleitete oder aus dem Reaktionsraum ausgeleitete Abgas verstärkt an der Reaktion beteiligt.

Unterschiedliche Schadstoffe, so beispielsweise SO₂ und NOₓ, haben bekanntlich unterschiedliche Reaktionsgeschwindigkeiten mit den üblichen Aktivkohle-Adsorptionsmitteln. Die durch Aufbrechen der Aufgabe- und Abzugskegel ermöglichte bessere Einstellbarkeit der Adsorptionsfronten läßt sich in Weiterbildung der Erfindung dadurch vorteilhaft nutzen, daß verschiedene unerwünschte Abgasbestandteile, z.B. Hg, SO₂, HCl und NOₓ, in unterschiedlichen vertikalen Adsorptionsschichten abgetrennt und in getrennten Strömen aus dem Reaktionsraum abgeführt werden. Die in getrennten Strömen abgezogenen Adsorptionsmittel können dann unterschiedlichen Weiterverarbeitungsschritten unterworfen werden. Die mit besonders reaktionsschnellen Schwermetallen, z.B. Hg, beladenen Adsorptionsmittelströme werden getrennt entsorgt. Ähnliches gilt auch für Adsorptionsmittel, das mit SO₂ und HCl beladen ist. Als Adsorptionsmittel genügt in beiden Fällen sogenannter Herdofenkoks (HOK), das ist Braunkohlenaktivkoks, dessen Regeneration unökonomisch ist. Bei der NOₓ-Reduktion ist dagegen pelletierter Steinkohlenaktivkoks als Adsorptionsmittel bevorzugt. Dessen Preis macht die Wiederaufbereitung und Wiederverwendung in einer NOₓ-Reduktionsstufe wirtschaftlich sinnvoll.

Bei einer zweckmäßigen Weiterentwicklung des Verfahrens werden dem Abgas beim Durchströmen unterschiedlicher Adsorptionsschichten verschiedene Strömungsgeschwindigkeiten gegeben.

Derartige unterschiedliche Strömungsgeschwindigkeiten sind insbesondere dann sinnvoll, wenn in einer Reihenschaltung mehrerer Adsorptionsschichten oder Reaktionsräume verschiedene Adsorptionsmittel, wie beispielsweise HOK und Steinkohlenaktivkoks zum Einsatz kommen. Der in der Regel als relativ feinkörniges Fraktionsgemisch mit einer Teilchengröße zwischen 1 und 4 mm anfallende HOK sollte von dem Abgas wesentlich langsamer durchströmt werden als der in der Regel einheitlich beispielsweise mit 4 mm pelletierte Steinkohlenaktivkoks. Wird derselbe Abgasstrom nacheinander durch mehrere Adsorptionsschichten geleitet, so können die Strömungsgeschwindigkeiten in diesen Adsorptionsschichten durch Bemessung der den Adsorptionsschichten jeweils zugeordneten Anströmflächen eingestellt werden.

Die Erfindung ist an sich unabhängig von der Art des verwendeten Adsorptionsmittelbettes. Im Gegensatz zu den üblichen Wanderbettverfahren findet bei der Erfindung bevorzugt ein Festbett Verwendung, das nicht kontinuierlich, sondern zyklisch, d.h. nach weitgehender Beladung, ausgetauscht wird. Die Verwendung von Festbetten mit besonders einfacher Schüttgutmechanik und betrieblicher Handhabung bietet sich bei der Erfindung aufgrund der Möglichkeit der genauen Einstellung der Adsorptionsfronten unterschiedlicher Schadstoffe und der besseren Durchströmung über die gesamte Adsorptionsmittelsäule an.

Eine noch zuverlässigere Verhinderung der Kondensatbildung im Fußbereich des Reaktors läßt sich in Weiterbildung der Erfindung dadurch erreichen, daß die Abzugstrichter und/oder daran anschließende Abzugsrohre mit dem Abgas umspült und durch das Abgas beheizt werden. Das aus einer ersten Reaktionsstufe austretende, zumindest von einigen Schadstoffen gereinigte Abgas wird unter dem Verteilboden zurückgeführt und wärmt dadurch die mit dem Adsorptionsmittel gefüllten Abzugstrichter und deren Abzugsrohre.

Ein Teil des Abgases kann aber auch von unten durch die Adsorptionsmittel-Abzugstrichter in den Reaktionsraum eingeleitet werden. Die Wirkung des quasi im Gegenstrom von unten eingeführten Teils des zu reinigenden Abgases entspricht derjenigen des kopfseitig ein- oder ausgeführten Abgas-Teilstroms; d.h. die in den abzugsseitigen Trichtern befindliche Adsorptionsmittelmenge wird unmittelbar an der Adsorption beteiligt, so daß auch kleine Reste von noch unbeladenen Körnern vor deren Abzug vollständig ausgenutzt werden können.

Da mit Hilfe des erfindungsgemäßen Verfahrens eine separate Abtrennung unterschiedlicher Schadstoffe in verschiedenen vertikalen Adsorptionsmittelschichten oder hintereinandergeschalteten Reaktionsstufen möglich ist, eignet sich das erfindungsgemäße Verfahren besonders für die komplexe Rauchgasreinigung in Müllverbrennungsanlagen, in denen typischerweise stark unterschiedliche Schadstoffe anfallen. Die Erfindung ermöglicht eine Abtrennung stark unterschiedlicher Bestandteile in einem grundsätzlich einheitlichen on-line-Verfahren.

Eine bevorzugte Ausführungsform der erfindungsgemäßen Vorrichtung, die die Vorteile einer besonders kompakten Bauweise mit optimaler Einstellbarkeit der Anströmflächen und Abgasgeschwindigkeiten in den einzelnen Adsorptionsschichten vereinigt, zeichnet sich erfindungsgemäß dadurch aus, daß in einem zylindrischen Gehäuse wenigstens zwei ringförmige Reaktionsräume konzentrisch angeordnet sind, daß die beiden Ringräume jeweils im wesentlichen radial vom Abgasstrom durchströmt und für den Abgasstrom in Reihe geschaltet sind und daß die Anströmfläche des für den Abgasstrom in Strömungsrichtung gesehen ersten Ringraums größer als die Anströmfläche des für den Abgasstrom in Strömungsrichtung gesehen zweiten Ringraums ist. Bei einer Ineinanderschachtelung der mindestens zwei Ringräume ergeben sich sowohl eine kompakte Bauweise als auch kurze Strömungswege. Die Größe der vorwiegend zylindrischen Anströmflächen läßt sich einfach durch geeignete Dimensionierung der Radien einstellen. Eine gleichmäßige Strömung in den zumindest zwei Ringräumen läßt sich durch radiale Durchströmung der Ringräume bzw. der ringförmigen Adsorptionsmittelbetten erreichen.

Zweckmäßige Weiterbildungen der erfindungsgemäßen Vorrichtung sind in den Unteransprüchen gekennzeichnet. Auch Teilkombinationen und Unterkombinationen der Merkmale der Patentansprüche gelten als erfindungswesentlich offenbart.

Im folgenden wird die Erfindung anhand von in der Zeichnung schematisch dargestellten Ausführungsbeispielen näher erläutert. In der Zeichnung zeigen:
- Fig. 1: einen Vertikalschnitt durch ein Ausführungsbeispiel der erfindungsgemäßen Adsorptionsvorrichtung;
- Fig. 2: eine Ansicht entlang der Schnittlinie II-II in Fig. 1;
- Fig. 3: eine Ansicht entsprechend Fig. 1 auf ein abgewandeltes Ausführungsbeispiel der Erfindung;
- Fig. 4: einen Vertikalschnitt durch ein anderes Ausführungsbeispiel der erfindungsgemäßen Adsorptionsvorrichtung; und
- Fig. 5: eine Schnittansicht entlang der Schnittlinie V-V in Fig. 4.

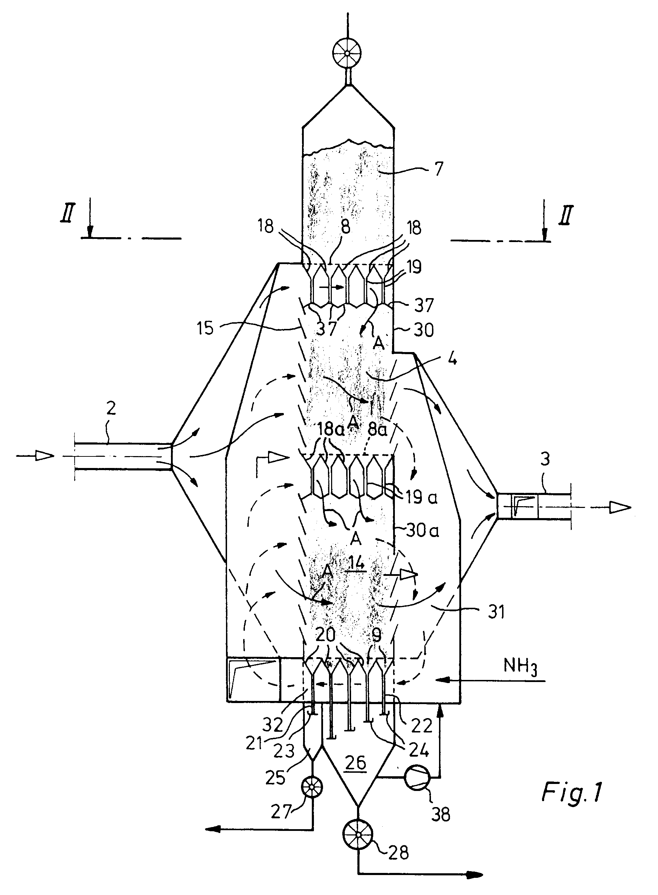

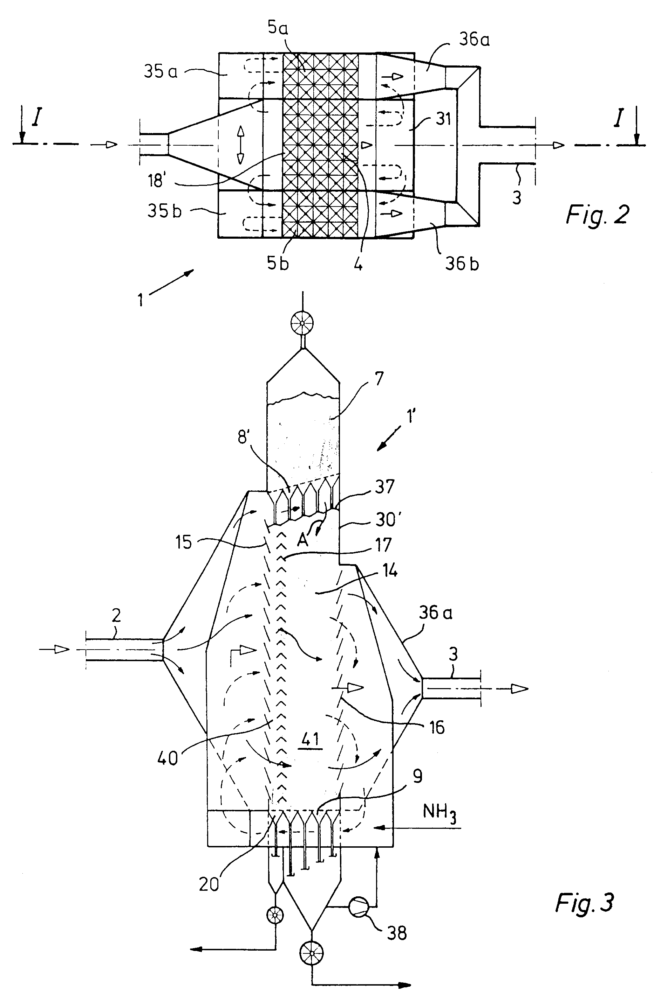

Der in den Figuren 1 und 2 in Vertikal- und Horizontalschnitten dargestellte Adsorber 1 hat einen Rohgaseinlaß 2 und einen Reingasauslaß 3. Zwischen Einlaß und Auslaß durchströmt das Abgas eine erste Reaktionsstufe 4 und ein zweite Reaktionsstufe, die in zwei parallelgeschaltete Reaktionskammern 5a und 5b aufgeteilt ist (Fig. 2).

Die erste Reaktionsstufe 4 hat eine im Querschnitt rechteckige Reaktionskammer 14, die im Betrieb mit einem Schüttgutbett aus stückigem oder körnigem Adsorptionsmittel gefüllt ist. Einlaßseitig ist die Kammer 14 durch eine über die volle Kammerhöhe reichende Jalousie 15 und auslaßseitig durch eine nur bis zu einer begrenzten Höhe reichende Jalousie 16 begrenzt. Die Adsorptionsmittelaufgabe erfolgt von einem der Kammer 14 aufgesetzten Vorratsbehälter 7 aus über einen kopfseitigen Verteilboden 8. Der Verteilboden besteht aus einem bei dem dargestellten Ausführungsbeispiel gleichmäßigen Raster von nebeneinander und hintereinander in Reihen und Spalten angeordneten quadratischen Aufgabetrichtern 18, an die sich in die Kammer 14 mündende Aufgaberohre 19 anschließen.

Ein Zwischenboden 8a ist etwa auf halber Höhe der Kammer 14 eingebaut. Er dient vor allem der Druckentlastung bei hohen Adsorptionsbetten und hat in dem dargestellten Ausführungsbeispiel die gleiche Gestaltung und Anordnung (Raster von Aufgabetrichtern 18a und Aufgaberohren 19a und Sperrstrecke 30a) wie der Verteilboden 8. Auch die Abgasführung durch die Schüttkegel unterhalb des Zwischenbodens 8a entspricht derjenigen im Kopfbereich. Der Einbau eines oder mehrerer Zwischenböden 8a in die Reaktionskammer ist nicht notwendig aber häufig zweckmäßig.

Ein Abzugsboden 9 ist ähnlich dem Verteilboden 8 aus einem Raster von nebeneinander und hintereinander angeordneten Abzugstrichtern 20 aufgebaut. An die Abzugstrichter 20 schließen sich Abzugsrohre 21 bzw. 22 an. Die Abzugsrohre 21 sind durch Verschlußelemente, z.B. Klappen oder Schieber 23 und die Abzugsrohre 22 durch Verschlußelemente 24 abgeschlossen. Zum Abziehen des Schüttguts aus der Kammer 14 werden die Verschlußelemente 23, 24 in bekannter Weise betätigt. Die Abzugsrohre münden in unterschiedliche Sammelbehälter 25 bzw. 26, von denen aus das mit den abgetrennten Schadstoffen beladene Adsorptionsmittel mit Hilfe geeigneter Fördermittel - hier als Zellenradschleuse 27, 28 dargestellt - zur Weiterverarbeitung abgefördert werden kann.

Die der einlaßseitigen Reihe 18' von Aufgabetrichtern und dementsprechend auch von Abzugstrichtern 20 entsprechende Schüttgutschicht ist vorzugsweise durch eine geeignete Jalousie 17 bzw. andere geeignete Führungselemente von der übrigen Schüttgutsäule abgeteilt (Fig. 3), so daß sich die Adsorptionsschicht 40 zwischen Einlaßjalousie 15 und Trennwand 17 getrennt über die zugehörigen Abzugstrichter 20, Abzugsrohre 21, Sammelbehälter 25 und Fördervorrichtung 27 abfördern läßt. Entsprechendes gilt natürlich auch für Schüttgutschichten 41 auf der Abströmseite der Trennwand 17.

Der Rohgaseinlaß 2 erweitert sich auf die Gesamthöhenabmessung der Reaktionskammer 14, und zwar bis zu dem Bereich der Aufgabetrichter 18 und Aufgaberohre 19. Das Abgas kann daher sowohl von der Seite her durch die Jalousie 15, als auch zwischen den Aufgaberohren 19 von oben durch die Schüttkegel 37 in das Adsorptionsmittelbett eintreten, wie mit den ausgezogenen Pfeilen A in Fig. 1 veranschaulicht ist. Das Abgas kann daher nicht nur bei einem Wanderbett, sondern auch bei einem Festbett alle Schüttgutbettzonen erreichen. Damit nehmen praktisch alle Teilchen in gleicher Weise an der Reaktion teil.

Austrittsseitig ist zwischen der obersten Schicht (Schüttkegel 37) und dem oberen Ende der abströmseitigen Jalousie 16 eine Sperrstrecke in Form einer geschlossenen Wand 30 vorgesehen, die einen Kurzschluß des Abgases von oben direkt in den Auslaßkanal 31 verhindert.

Der Auslaßkanal 31 geht in einen horizontalen Kanalabschnitt 32 über, der unter dem Abzugsboden 9 verläuft. Das durch den Auslaßkanal 31 die Reaktionskammer 14 verlassende vorgereinigte Abgas umspült im Kanalabschnitt 32 die Abzugstrichter 20 und die Abzugsrohre 21, 22 und beheizt dabei das in diesen Elementen befindliche Adsorptionsmittel soweit, daß eine Kondensation zuverlässig verhindert wird. Das Abgas wird aus dem Kanalabschnitt 32 nach oben in einen Abgas-Einlaßbereich 35a und 35b für die beiden Kammern 5a und 5b der zweiten Reaktionstufe umgelenkt (Fig. 2). Die Abgasverteilung in den beiden Kammern 5a und 5b entspricht prinzipiell der zuvor beschriebenen Abgasverteilung an der einlaßseitigen Jalousie 15 und den kopfseitigen Schüttkegeln 37 der ersten Reaktionstufe 4. Auch in den beiden Kammern 5a und 5b sind Aufgabe- und Abzugstrichter rasterförmig angeordnet, um eine möglichst gleichmäßige Beteiligung des Adsorptionsmittels im gesamten Innenraum der Kammern 5a und 5b zu gewährleisten. Der Abzug des beladenen Adsorptionsmittels findet allerdings in der Regel durch alle Abzugstrichter und -rohre der zweiten Reaktionsstufe 5a und 5b gleichzeitig statt. Auch die Auslaßkanäle 36a und 36b haben im Bereich der abströmseitigen Jalousie der beiden Reaktionskammern 5a und 5b eine dem Auslaßkanal 31 entsprechende Gestaltung, so daß auch in den Kammern 5a und 5b für eine großflächige Querströmung des Abgases gesorgt ist. Die beiden Kanäle 36a und 36b vereinigen sich entsprechend Darstellung in Fig. 2 im Reingasauslaß 3.

Die beiden Reaktionsstufen 4 und 5 sind nebeneinander angeordnet, wobei die zweite Reaktionsstufe in zwei Teilkammern 5a und 5b aufgeteilt ist. Diese Kombination vereinigt die Vorteile einer kompakten Bauform mit einer guten Ausnutzung und Beladung der Adsorptionsmittel und einfachen Steuermöglichkeiten der Adsorptionsfronten.

Der Kanalabschnitt 32 kann u.U. auch so breit gemacht werden, daß er über die volle Breite der drei nebeneinander angeordneten Reaktionskammern 5a, 4 und 5b reicht und dadurch auch die Abzugsrohre der Kammern 5a und 5b beheizt.

Wie in den Figuren 1 und 3 zu sehen ist, wird das Reduktionsmittel NH₃ an der Umlenkstelle zwischen dem Auslaßkanal 31 und dem horizontalen Kanalabschnitt 32 eingedüst. Selbstverständlich sind auch andere Aufgabestellen oder eine Vorbeladung des Steinkohleaktivkokses in den Kammern 5a und 5b möglich.

Auch hinsichtlich der Formen und Abmessungen der einzelnen Trichter 18 und 20 unterliegt die Erfindung keinen besonderen Ausnahmebedingungen. Die dargestellte quadratische oder gegebenenfalls eine rechteckige Querschnittsform sorgt für eine besonders großflächige Ausnutzung der Querschnittsfläche an der Schüttgutverteilung und für eine günstige Schüttgutmechanik. Andere Formen sind jedoch bei prinzipiell gleichen Vorteilen der Erfindung möglich.

Häufig sind unterschiedlich große Anströmflächen der beiden Reaktorstufen, insbesondere größere Anströmflächen der ersten Stufe 4 relativ zur zweiten Stufe 5 zweckmäßig, um eine dem Schüttgut und Adsorptionsverhalten angepaßte Abgas-Strömungsgeschwindigkeit zu erreichen. Speziell zur Vergrößerung ihrer Anströmflächen kann die erste Reaktorstufe anstelle der zweiten Reaktorstufe in zwei parallele Teilkammern aufgeteilt sein. Die Abgasführung ist dann natürlich umgekehrt der Darstellung in Fig. 2.

In den für alle Kammern 5a, 4 und 5b getrennten Sammelbehältern 7 befindet sich neues Schüttgut zum Austausch verbrauchten Adsorptionsmittels. Wichtig ist, daß bei der Adsorption hoch giftiger Stoffe und weniger aggressiver Medien eine Trennung des beladenen Adsorptionsmittels erfolgt. Dies geschieht bei der beschriebenen Anordnung einfach dadurch, daß Adsorptionsmittelschichten entsprechend unterschiedlichen Adsorptionsfronten in getrennte Sammelbehälter 25 und 26 (bzw. in Sammelbehälter der Kammern 5a und 5b) abgezogen und von dort aus weitergefördert werden. Derartige unterschiedliche Adsorptionsschichten 40 und 41 sind in Fig. 3 dargestellt. In der eingangsseitigen Adsorptionsschicht 40 kann beispielsweise der größte Teil von Schwermetallen, insbesondere Hg adsorbiert und über die Abzugsrohre 21 und den Sammelbehälter 25 abgezogen werden.

Das in Fig. 3 dargestellte Ausführungsbeispiel unterscheidet sich von dem Ausführungsbeispiel gemäß Fig. 1 aber auch dadurch, daß der Verteilboden 8' von der Einlaßseite zur Abströmseite des Reaktors 1' ansteigend angeordnet ist. Dadurch wird die Sperrstrecke 30' bei im übrigen gleicher Gestaltung des Adsorbers 1' verlängert. Die Schnittansicht gemäß Fig. 2 gilt auch für das Ausführungsbeispiel gemäß Fig. 3.

Der Rohgaseinlaß 2 kann aber auch bis unterhalb des Abzugsbodens 9 reichen, wobei dann in den Abzugstrichtern 20 geeignete Öffnungen zum Innenraum der Reaktionskammer 14 ausgebildet sind, durch die Rohgas eintreten, aber kein körniges Adsorptionsmittel in den Abgas-Eintrittsverteiler austreten kann. Derartige Anströmböden sind beispielsweise aus dem DE-GM G 87 06 839.8 bekannt. Bei Ausbildung des Abzugsbodens 9 als Anströmboden muß eine der Wand 30 entsprechende Sperrstrecke auch an der Rückwand unmittelbar oberhalb des Bodens 9 vorgesehen werden, um Abgaskurzschlüsse zum Auslaßkanal 31 hin zu vermeiden.

Ein Gebläse 38 ist mit einer Verbindungsleitung zwischen dem größeren Sammelbehälter 26 und dem Kanalabschnitt 32 angeordnet und dient dazu, bei Beginn des Adsorbensabzugs eventuelle Verbackungen in den Einzeltrichtern bzw. in den Ausführungsrohren mittels einer künstlich aufgezwungenen Strömung durch Absaugen von Gas aufzubrechen.

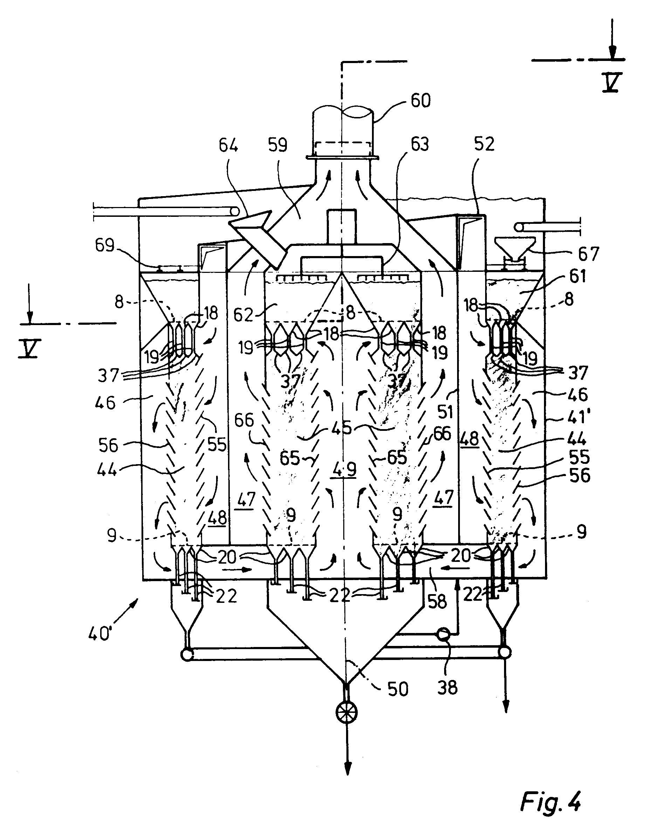

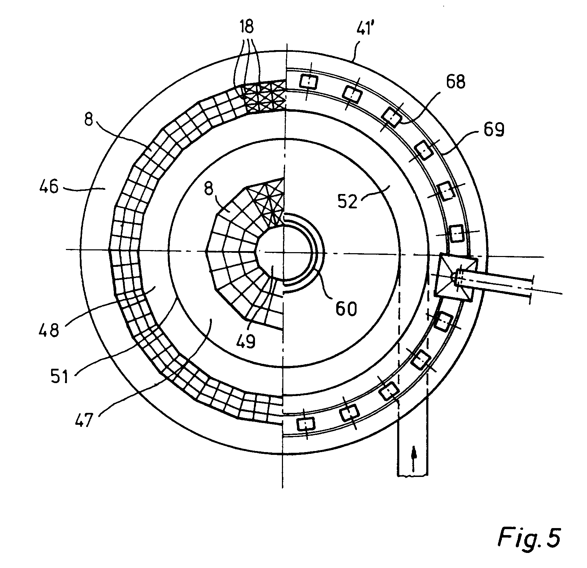

In den Figuren 4 und 5 ist eine bevorzugte Ausführungsform eines zweistufigen Reaktors 40' dargestellt, dessen wesentliche Komponenten in einem zylindrischen Reaktorgehäuse 41' eingebaut sind. In dem Gehäuse 41' sind zwei ringförmige Reaktionskammern 44 und 45 konzentrisch ineinander verschachtelt angeordnet. Die Ringräume 44 und 45 sind in dem beschriebenen Ausführungsbeispiel mit unterschiedlichen Adsorptionsmitteln gefüllt, beispielsweise der äußere Ringraum 44 mit HOK und der innere Ringraum mit pelletiertem Steinkohleaktivkoks. Dementsprechend dient der äußere Ringraum 44 der Abscheidung der besser adsorbierbaren Schadstoffe (entsprechend der ersten Stufe 4 des zuvor beschriebenen Ausführungsbeispiels) und der innere Ringraum 45 der NOₓ-Reduktion entsprechend den Kammern 5 des zuvor beschriebenen Ausführungsbeispiels. Die ersten und zweiten Ringräume 44 und 45 sind jeweils von ringförmigen Abgasauslaßkanälen 46 und 47 umgeben. Der Abgaseinlaß 48 ist ebenfalls ein Ringkanal, der auf der radial innen gelegenen Seite des Ringraums 44 angeordnet ist. Der Abgaseinlaß der innen gelegenen zweiten Reaktorstufe 45 ist ein zentraler Kanal 49, der entlang der Zentralachse 50 des Reaktors 40' verläuft. Der ringförmige Abgaseinlaß 48 der ersten Reaktorstufe 44 und der ebenfalls ringförmige Abgasauslaß 47 der zweiten Reaktorstufe 45 sind durch eine im vorliegenden Fall zylindrische Zwischenwand 51 getrennt.

Ein schraubenlinienförmiger Eintrittskanal 52 ist im Kopfbereich des Reaktorgehäuses 41' koaxial um dessen Zentralachse 50 angeordnet und mit dem als Abgaseinlaß der ersten Reaktionsstufe 44 dienenden Ringkanal 48 verbunden. Aufgrund der schraubenlinienförmigen Anordnung des Eintrittskanals 52 erhält das zu reinigende und unter Umständen mit Feststoffpartikeln und/oder Wassertröpfchen beladene Abgas einen relativ starken Drall, der die Teilchen bzw. Tröpfchen höheren Gewichts nach außen in den Bereich über den Schüttkegeln 37 und zwischen die Aufgabetrichter bzw. -rohre 18, 19 der ersten Reaktionsstufe drängt. Die Ausbildung und Anordnung der Aufgabe- und Abzugstrichter sowie die Einführung des Abgases in die beiden Reaktionsstufen 44 und 45 entsprechen den anhand der Figuren 1 bis 3 erläuterten Verhältnisssen. Bedingt durch die kreisförmige Anordnung und Unterteilung der Verteilböden 8 und Abzugsböden 9 haben die Trichter 18 bzw. 20 aber bevorzugt eine trapezförmige Gestaltung, wie sie aus der linken Hälfte der Fig. 5 erkennbar ist.

Auch die Ausbildung der Jalousien oder sonstigen Trennelemente zur Begrenzung der Reaktionsräume 44 bzw. 45 kann derjenigen des zuvor beschriebenen Ausführungsbeispiels entsprechen, wobei allerdings die Trennwände 55 und 56 (bzw. 65 und 66) an den Anström- und Abströmseiten entsprechend dem Kammerquerschnitt durch ausreichende Segmentierung angenäherte kreisringförmige Gestaltung haben.

Wie bereits erwähnt tritt das ungereinigte Abgas durch den einen Drall aufdrückenden Eintrittskanal 52 in das Reaktorgehäuse 41 ein, erreicht die vorwiegend zylindrischen Anströmflächen im Bereich der Trennelemente 55, kreuzt die ringförmige erste Reaktionsstufe 44, tritt an deren Abströmseite durch die abströmseitigen Trennelemente 56 in den äußeren Ringkanal 46 aus, wird nach unten in eine kreisförmige Strömungskammer 58 gelenkt und strömt dort radial nach innen in Richtung des zentralen Abgaseinlasses 49 der zweiten Reaktionsstufe 45. In der kreisförmigen Strömungskammer 58 umspült das Abgas die Abzugstrichter 20 und die Abzugsrohre 22 ähnlich wie bei dem zuvor beschriebenen Ausführungsbeispiel.

In dem zentralen Abgaseinlaß 49 wird das von den rascher adsorbierten Schadstoffen befreite, d.h. teilweise gereinigte Abgas zunächst axial verteilt und strömt von dort entsprechend den Pfeilen im Kreuzstrom bzw. zwischen den Aufgaberohren 19 von oben in den Schüttgutring der zweiten Reaktionsstufe 45. Die Trennelemente 65 trennen den Schüttgutring 45 einlaßseitig und die Trennelemente 66 auslaßtseitig von den angrenzenden Abgaskanälen 49 bzw. 47. Der auslaßseitige Abgaskanal 47 mündet im Kopfteil in einen Abzugstrichter 59, von wo aus das Reingas in einen zentral angeordneten Kamin 60 geleitet werden kann.

Die den Trennelementen 55 entsprechende Anströmfläche der ersten Reaktionsstufe 44 ist etwa im Radienverhältnis größer als die Anströmfläche 65 der zweiten Reaktionsstufe 45. Dementsprechend kleiner ist die Strömungsgeschwindigkeit des Abgases im ersten Ringraum im Vergleich zu derjenigen im zweiten Ringraum 45. Dies ist auch erwünscht, insbesondere bei Verwendung der unterschiedlichen Adsorptionsmittel in den beiden Ringräumen 44 und 45.

Über den ringförmigen Aufgabeböden 8 sind ebenfalls ringförmige Vorratskammern 61 bzw. 62 angeordnet. In bzw. über der inneren Vorratskammer 62 ist eine motorgetriebene Verteilvorrichtung in Form eines umlaufenden Rechens 63 angeordnet. Der umlaufende Rechen 63 nivelliert das in der Ringkammer 62 befindliche Schüttgut auch bei Aufgabe über einen einzigen festen Aufgabestutzen 64.

Die der ersten Reaktionsstufe 44 zugeordnete Vorratskammer 61 wird mit Hilfe einer Schienenlore 67 durch kreisförmig um die Zentralachse 50 verteilte Deckwandöffnungen 68 beschickt. Die Lore läuft auf einem ebenfalls zur Zentralachse 50 konzentrischen Schienenkranz 69. Vorzugsweise ist die Lore mit Mitteln zum luftdichten Andocken an die Beschickungsöffnungen 68, einem luftdicht verschließbaren Laderaum und einem Gebläse zur Druckbeaufschlagung des Laderaums versehen. Bei dieser Ausbildung kann der im Reaktionsraum 44 und damit auch im Vorratsraum 61 herrschende Überdruck im Laderaum der Lore 67 kompensiert werden, so daß kein Rauchgas in die Lore und von dort in die Umgebungsatmosphäre austreten kann.

Die Erfindung ist nicht auf die dargestellten Ausführungsbeispiele eingeschränkt. So ist es im Rahmen der Erfindung ohne weiteres möglich, mit einer einzigen Adsoprtionsschicht zu arbeiten. Auch kann beispielsweise in Fig. 1 die Strömungsrichtung des Abgases umgekehrt werden, so daß das Rohgas bei 3 in den Adsorber 1 eintritt und letzteren bei 2 verläßt. Kopfseitig erfolgt dann ein Austritt des Rohgases aus der Adsorptionsschicht.

## Patentansprüche

1. Verfahren zum Abtrennen unerwünschter Bestandteile aus einem Abgas durch Adsorption an einem stückigen oder körnigen Adsorptionsmittel, wobei das zu behandelnde Abgas wenigstens einen mit wenigstens einer Adsorptionsmittelschicht gefüllten Reaktionsraum durchströmt,
das Adsorptionsmittel durch mehrere getrennte Aufgabe- und Abzugstrichter rasterförmig verteilt in den Reaktionsraum eingeführt und aus diesem abgezogen wird und
das Abgas teilweise von der Seite aus quer zu der Adsorptionsmittelschicht und teilweise von oben über die von den Aufgabetrichtern gebildeten Schüttgutkegel eingeleitet und durch den Reaktionsraum geführt wird, so daß das Adsorptionsmittel in allen Zonen des Reaktionsraumes im wesentlichen gleichmäßig an der Adsorption teilnimmt.

2. Verfahren nach Anspruch 1, dadurch gekennzeichnet,
daß verschiedene unerwünschte Abgasbestandtelle, z. B. Hg, SO₂, HCl und NOₓ, in unterschiedlichen vertikalen Adsorptionsschichten abgetrennt und in getrennten Strömen aus dem Reaktionsraum abgeführt werden.

3. Verfahren nach Anspruch 1 oder 2, dadurch gekennzeichnet,
daß in wenigstens zwei unterschiedlichen Adsorptionsschichten unterschiedliche Adsorptionsmittel, beispielsweise Herdofenkoks und Steinkohlenaktivkoks verwendet werden.

4. Verfahren nach Anspruch 3, dadurch gekennzeichnet,
daß das Abgas wenigstens zwei unterschiedliche Adsorptionsschichten mit verschiedenen Strömungsgeschwindigkeiten durchströmt.

5. Verfahren nach Anspruch 4, dadurch gekennzeichnet,
daß derselbe Abgasstrom nacheinander durch die Adsorptionsschichten geleitet wird und die Strömungsgeschwindigkeiten durch Bemessung der den Adsorptionsschichten zugeordneten Anströmflächen eingestellt werden.

6. Verfahren nach einem der Ansprüche 2 bis 5,
dadurch gekennzeichnet,
daß die in genannten Schichten abgezogenen Adsorptionsmittel verschiedenen Weiterverarbeitungsschritten unterworfen werden.

7. Verfahren nach einem der Ansprüche 1 bis 6,
dadurch gekennzeichnet,
daß der Reaktionsraum chargenweise gefüllt und entleert wird und daß die Abgasbehandlung in wenigstens einem Festbett erfolgt.

8. Verfahren nach einem der Ansprüche 1 bis 7,
dadurch gekennzeichnet,
daß die Abzugstrichter und/oder daran anschließende Abzugsrohre mit dem Abgas umspült und beheizt werden.

9. Verfahren nach einem der Ansprüche 1 bis 8,
dadurch gekennzeichnet,
daß in einer ersten Adsorptionsschicht Schwermetalle, in einer zweiten Adsorptionsschicht leicht adsorbierbare gasförmige Bestandteile, wie SO₂ und HCl aus dem Abgas abgetrennt werden und das Abgas schließlich in einer weiteren Reaktionsstufe einer NOₓ-Reduktion unterworfen wird.

10. Verfahren nach einem der Ansprüche 1 bis 9,
dadurch gekennzeichnet,
daß ein Teil des Abgases von unten durch die Adsorptionsmittel-Abzugstrichter in den Reaktionsraum eingeleitet wird.

11. Verwendung des Verfahrens nach einem der Ansprüche 1 bis 10 zur Rauchgasreinigung in Müllverbrennungsanlagen.

12. Vorrichtung zum Abtrennen unerwünschter Bestandteile aus einem Abgas, mit einem wenigstens einen Reaktionsraum (14) begrenzenden Reaktor (4), der kopfseitig Aufgabemittel und fußseitig trichterförmige Abzugsmittel zur Aufgabe und zum Abzug eines stückigen oder körnigen Adsorptionsmittels aufweist,
wobei die Aufgabemittel durch ein Raster von mehreren neben- und hintereinander angeordneten Aufgabetrichtern (18) und die Abzugsmittel durch ein weiteres Raster von neben- und hintereinander angeordneten Abzugstrichtern (20) gebildet sind und daß sowohl mindestens an einer Seite als auch im Kopfbereich des Reaktionsraums (14) Abgaseinlässe vorgesehen sind.

13. Vorrichtung nach Anspruch 12, dadurch gekennzeichnet,
daß der Reaktionsraum (14) durch wenigstens eine Reihe von Trennelementen (17, 16) in wenigstens zwei im wesentlichen vertikal und quer zur Abgasströmungsrichtung verlaufende Reaktorabteile (40, 41) unterteilt ist und daß jedes Reaktorabteil mehrere Aufgabe- und Abzugstrichter (20) mit separat betätigbaren Verschluß- und/oder Dosiervorrichtungen (23, 27 und 24, 28) aufweist.

14. Vorrichtung nach Anspruch 13, dadurch gekennzeichnet,
daß die Trennelemente als Jalousien (16) oder Doppeljalousien (17) ausgebildet sind.

15. Vorrichtung nach einem der Ansprüche 12 bis 14,
dadurch gekennzeichnet,
daß wenigstens zwei getrennte Reaktionskammern (4, 5a, 5b; 40, 41), die unabhängig voneinander mit Adsorptionsmittel füllbar und entleerbar sind, räumlich nebeneinander angeordnet und für den Abgasstrom hintereinander geschaltet sind.

16. Vorrichtung nach einem der Ansprüche 12 bis 15,
dadurch gekennzeichnet,
daß die Abzugstrichter (20) und/oder daran anschließende Abzugsrohre (21, 22) im Strömungsweg (32) des zu reinigenden Abgases angeordnet sind.

17. Vorrichtung nach Anspruch 12, dadurch gekennzeichnet,
daß ein Abgaskanal (32) dem Abgasauslaß (31) einer Reaktorstufe (4) nachgeschaltet und unter deren (4) Boden (9) derart angeordnet ist, daß die Abzugstrichter (20) und -rohre (21, 22) vom Abgas unter Beheizung umspült sind.

18. Vorrichtung nach einem der Ansprüche 12 bis 17,
dadurch gekennzeichnet,
daß das fußseitige Trichterraster (20) mit Öffnungen zum Durchtritt des zu reinigenden Abgases versehen ist und daß die Öffnungen mit dem Abgaseinlaß (2) verbunden sind.

19. Vorrichtung nach einem der Ansprüche 12 bis 18,
dadurch gekennzeichnet,
daß sich der Abgaseinlaß (2) etwa über die Gesamthöhe des Reaktionsraums erstreckt, während der Abgasauslaß (31) nur eine begrenzte Höhe der Austrittsseite des Reaktors (4) überspannt, um Strömungskurzschlüsse im Kopfbereich des Reaktionsraums zu vermeiden.

20. Vorrichtung nach Anspruch 17, dadurch gekennzeichnet,
daß eine erste Reaktorstufe (4) beidseitig von zweiten Reaktorstufen (5a, 5b) flankiert ist und daß der unter dem Boden (9) der ersten Reaktorstufe zurückgeführte Abgasstrom in wenigstens zwei parallele Teilströme aufgeteilt und in die beiden die erste Reaktorstufe (4) flankierenden Reaktorstufen (5a, 5b) eingeleitet wird.

21. Vorrichtung nach einem der Ansprüche 12 bis 20,
dadurch gekennzeichnet,
daß mehrere Reihen (18') von Aufgabetrichtern (18) vom Abgaseinlaß (2) aus in gestuften Höhen hintereinander angeordnet sind.

22. Vorrichtung zum Abtrennen unerwünschter Bestandteile aus einem Abgas mit einem wenigstens einen Reaktionsraum (44, 45) begrenzenden Reaktor (40'), wobei der Reaktionsraum (44; 45) gemäß den Ansprüchen 12 bis 19 gebaut ist,
**dadurch gekennzeichnet,**
daß in einem zylindrischen Gehäuse (41') wenigstens zwei ringförmige Reaktionsräume (44, 45) konzentrisch angeordnet sind,
daß die beiden Ringräume (44, 45) jeweils im wesentlichen radial vom Abgasstrom durchströmt und für den Abgasstrom in Reihe geschaltet sind und
daß die Anströmfläche des für den Abgasstrom in Strömungsrichtung gesehen ersten Ringraums (44) größer als die Anströmfläche des für den Abgasstrom in Strömungsrichtung gesehen zweiten Ringraums (45) ist.

23. Vorrichtung nach Anspruch 22, dadurch gekennzeichnet,
daß die Anström- und Anströmflächen der beiden Ringräume (44, 45) so angeordnet sind, daß die Ringräume im wesentlichen radial von innen nach außen von Abgas durchströmt sind.

24. Vorrichtung nach Anspruch 23, dadurch gekennzeichnet,
daß die ersten undzweiten Ringräume (44, 45) von ringförmigen Abgasauslaßkanälen (46, 47) umgeben sind, daß der Abgaseinlaß fur den ersten Ringraum (44) ebenfalls als Ringkanal (48) ausgebildet ist und daß der Abgaseinlaß (48) des ersten Ringraums und der Abgasauslaß (47) des zweiten Ringraums (45) durch eine zylindrische Zwischenwand (51) getrennt sind.

25. Vorrichtung nach Anspruch 24, dadurch gekennzeichnet,
daß der den Abgasauslaß des ersten Ringraums (44) bildende Ringkanal (46) von der Reaktoraußenwand begrenzt ist.

26. Vorrichtung nach einem der Ansprüche 22 bis 25,
dadurch gekennzeichnet,
daß eine kreisförmige Strömungskammer (58), die den Abgasauslaß (46) des ersten Ringraums (44) mit dem Abgaseinlaß (49) des zweiten Ringraums (45) verbindet, unter den Abzugsböden (9) derart angeordnet ist, daß die Abzugstrichter (20) und/oder Abzugsrohre (22) von dem radial von außen nach innen strömenden teilgereinigten Abgas umspült und beheizt sind.

27. Vorrichtung nach einem der Ansprüche 22 bis 26,
dadurch gekennzeichnet,
daß ein schraubenlinienförmiger Eintrittskanal (52) im Kopfbereich des Reaktorgehäuses (41) um dessen Zentralachse (50) angeordnet und mit dem Abgaseinlaß (47) des ersten Ringraums (44) verbunden ist.

28. Vorrichtung nach einem der Ansprüche 22 bis 27,
dadurch gekennzeichnet,
daß die Aufgabe- (8) und Abzugsböden (9) ringförmig und deren Trichter (18, 20) trapezförmig gestaltet sind.

29. Vorrichtung nach einem der Ansprüche 22 bis 28,
dadurch gekennzeichnet,
daß über den ringförmigen Aufgabeböden (8) ringförmige Vorratskammern (61, 62) angeordnet sind.

30. Vorrichtung nach Anspruch 29, dadurch gekennzeichnet,
daß in einer ringförmigen Vorratskammer (62) eine motorgetriebene umlaufende Verteilvorrichtung (63) auf einer mit der vertikalen Gehäuseachse (50) zusammenfallenden Drehachse gelagert ist.

31. Vorrichtung nach Anspruch 29 oder 30, dadurch gekennzeichnet,
daß in einer Deckwand einer ringförmigen Vorratskammer (61) gleichförmige Beschickungsöffnungen (68) in gleichem Abstand um die Gehäuseachse (50) verteilt angeordnet sind und daß ein Schienenkranz (69) in entsprechendem radialen Abstand über der Deckwand angeodnet ist.

32. Vorrichtung nach Anspruch 31, dadurch gekennzeichnet,
daß ein auf dem Schienenkranz (69) laufendes Schienenfahrzeug (67) mit Mitteln zum vorzugsweise luftdichten Andocken an die Beschickungsöffnungen (68), einem luftdicht verschließbaren Laderaum und einem Gebläse Zur Druckbeaufschlagung des Laderaums versehen ist.

## Claims

1. Method for the separation of undesired components out of an exhaust gas by adsorption at a lumpy or granular adsorption medium, wherein the exhaust gas to be treated flows through at least one reaction space filled with at least one adsorption medium layer, the adsorption medium is introduced, distributed in the shape of a raster, into and withdrawn from the reaction space through several separate charging and discharging funnels and the exhaust gas is introduced partially from the side transversely to the adsorption medium layer and partially from above over the loose material cones formed by the charging funnels and led through the reaction space so that the adsorption medium participates in the adsorption substantially uniformly in all zones of the reaction space.

2. Method according to claim 1, characterised thereby, that different undesired exhaust gas components, for example Hg, SO₂, HC1 and NOₓ, are separated out in different vertical adsorption layers and conducted away out of the reaction space in separate flows.

3. Method according to claim 1 or 2, characterised thereby, that different adsorption media, for example hearth furnace coke and active coal coke, are used in at least two different adsorption layers.

4. Method according to claim 3, characterised thereby, that the exhaust gas flows at different speeds of flow through at least two different adsorption layers.

5. Method according to claim 4, characterised thereby, that the same exhaust gas flow is led through the adsorption layers one after the other and the speeds of flow are set by dimensioning of the leading surfaces associated with the adsorption layers.

6. Method according to one of the claims 2 to 5, characterised thereby, that the adsorption media drawn off in named layers are subjected to different further processing steps.

7. Method according to one of the claims 1 to 6, characterised thereby, that the reaction space is filled and emptied charge by charge and that the exhaust gas treatment takes place in at least one fixed bed.

8. Method according to one of the claims 1 to 7, characterised thereby, that the discharge funnels and/or discharge pipes thereat are flowed around and heated by the exhaust gas.

9. Method according to one of the claims 1 to 8, characterised thereby, that heavy metals are separated out from the exhaust gas in a first adsorption layer, easily adsorbable gaseous components, such as SO₂ and HC1, are separated out from the exhaust gas in a second adsorption layer and the exhaust gas is finally subjected to a NOₓ reduction in a further reaction stage.

10. Method according to one of the claims 1 to 9, characterised thereby, that a part of the exhaust gas is led into the reaction space from below through the adsorption medium discharge funnels.

11. Use of the method according to one of the claims 1 to 10 for the flue gas purification in refuse incineration plants.

12. Device for the separation of undesired components out of an exhaust gas, with a reactor (4), which bounds at least one reaction space (14) and comprises charging means at the head end and funnel-shaped discharging means at the foot end for the charge and discharge of a lumpy or granular adsorption medium, wherein the charging means are formed by a raster of several charging funnels (18) arranged one beside and behind the other and the discharging means are formed by a further raster of discharging funnels (20) arranged one beside and behind the other and exhaust gas inlets are provided at at least one side as well as also in the head region of the reaction space (14).

13. Device according to claim 12, characterised thereby, that the reaction space (14) is subdivided by at least one row of partition elements (16, 17) into at least two reactor compartments (40, 41) extending substantially vertically and transversely to the direction of flow of the exhaust gas and that each reactor compartment comprises several charging funnels and discharging funnels (20) with separately actuable closure and/or metering devices (23, 27 and 24, 28).

14. Device according to claim 13, characterised thereby, that the partition elements are constructed as louvre shutters (16) or double louvre shutters (17).

15. Device according to one of the claims 12 to 14, characterised thereby, that at least two separate reaction chambers (4, 5a, 5b; 40, 41), which are each fillable and emptiable independently of the other, are arranged one spatially beside the other and connected one behind the other for the exhaust gas flow.

16. Device according to one of the claims 12 to 15, characterised thereby, that the discharge funnels (20) and/or discharge pipes (21, 22) adjoining thereat are arranged in the flow path (32) of the exhaust gas to be purified.

17. Device according to claim 12, characterised thereby, that an exhaust gas channel (32) is connected downstream of the exhaust gas outlet (31) of a reactor stage (4) and arranged below its base (9) in such a manner that the discharge funnels (20) and pipes (21, 22) are flowed around by the exhaust gas while being heated.

18. Device according to one of the claims 12 to 17, characterised thereby, that the funnel raster (20) at the foot end is provided with openings for the passage of the exhaust gas to be purified and that the openings are connected with the exhaust gas inlet (2).

19. Device according to one of the claims 12 to 18, characterised thereby, that the exhaust gas inlet (2) extends over about the entire height of the reactor space, whilst the exhaust gas outlet (31) spans only a limited height on the exit side of the reactor (4) in order to avoid flow short-circuits in the head region of the reaction space.

20. Device according to claim 17, characterised thereby, that a first reactor stage (4) is flanked at both sides by second reactor stages (5a, 5b) and that the exhaust gas flow, which is led back below the base (9) of the first reactor stage (4), is divided up into at least two parallel partial flows and introduced into both the reactor stages (5a, 5b) flanking the first reactor stage (4).

21. Device according to one of the claims 12 to 20, characterised thereby, that several rows (18') of charging funnels (18) are arranged at stepped heights one behind the other out from the exhaust gas inlet (2).

22. Device for the separation of undesired components out of an exhaust gas, with a reactor (40'), which bounds at least one reaction space (44, 45), wherein the reaction space (44, 45) is constructed according to the claims 12 to 19, characterised thereby that, at least two annular reaction spaces (44, 45) are arranged concentrically in a cylindrical housing (41'), that both the annular spaces (44, 45) are each flowed through substantially radially by the exhaust gas flow and connected in series for the exhaust gas flow and that the leading surface of the first annular space (44) - as seen in direction of flow for the exhaust gas flow - is greater than the leading surface of the second annular space (45) - as seen in direction of flow for the exhaust gas flow.

23. Device according to claim 22, characterised thereby, that the leading and trailing surfaces of both the annular spaces (44, 45) are so arranged that the annular spaces are flowed through substantially radially from the inside outwardly by the exhaust gas.

24. Device according to claim 23, characterised thereby, that the first and second annular spaces (44, 45) are surrounded by annular exhaust gas outlet channels (46, 47), that the exhaust gas inlet for the first annular space (44) is likewise formed as annular channel (48) and that the exhaust gas inlet (48) of the first annular space and the exhaust gas outlet (47) of the second annular space (45) are separated by a cylindrical partition (51).

25. Device according to claim 24, characterised thereby, that the annular channel (46) forming the exhaust gas outlet of the first annular space (44) is bounded by the outer reactor wall.

26. Device according to one of the claims 22 to 25, characterised thereby, that a circular flow chamber (58), which connects the exhaust gas outlet (46) of the first annular space (44) with the exhaust gas inlet (49) of the second annular space (45), is arranged below the discharge bases (9) in such a manner that the discharge funnels (20) and/or discharge pipes (22) are flowed around and heated by the partially purified exhaust gas flowing radially inwards from the outside.

27. Device according to one of the claims 22 to 26, characterised thereby, that a helically shaped entry channel (52) is arranged in the head region of the reactor housing (41) around the central axis (50) thereof and connected with the exhaust gas inlet (47) of the first annular space (44).

28. Device according to one of the claims 22 to 27, characterised thereby, the charge bases (8) and the discharge bases (9) are structured to be annular and their funnels (18, 20) are structured to be trapezoidal.

29. Device according to one of the claims 22 to 28, characterised thereby, that annular reservoir chambers (61, 62) are arranged above the annular charge bases (8).

30. Device according to claim 29, characterised thereby, that a motor-driven rotating distributor device (63) is borne in one annular reservoir chamber (62) on a rotational axis co-inciding with the vertical housing axis (50).

31. Device according to claim 29 or 30, characterised thereby, that uniform charging openings (68) are arranged distributed at equal spacing about the housing axis (50) in a ceiling wall of one annular reservoir chamber (61) and that a rail ring (69) is arranged at a corresponding spacing above the ceiling wall.

32. Device according to claim 31, characterised thereby, that a rail vehicle (67) running on the rail ring (69) is provided with means for the preferably air-tight docking at the charging openings (68), a charging space which is closable to be air-tight and a blower for the pressure loading of the charging space.

## Revendications

1. Procédé pour la séparation de composants non souhaités d'un gaz d'échappement par adsorption sur un agent d'adsorption en morceaux ou en grains où le gaz d'échappement à tester traverse un espace de réaction rempli d'au moins une couche de l'agent d'adsorption,
l'agent d'adsorption est introduit et évacué de l'espace de réaction par plusieurs entonnoirs d'introduction et d'évacuation avec répartition en forme de quadrillage et
le gaz d'échappement est introduit partiellement à partir du côté, transversalement à la couche de l'agent d'adsorption et partiellement du dessus sur le cône de matières en vrac formé par les entonnoirs d'introduction et il est conduit à travers l'espace de réaction de manière que l'agent d'adsorption participe dans toutes les zones de l'espace de réaction essentiellement régulièrement à l'adsorption.

2. Procédé selon la revendication 1, caractérisé en ce que
les divers constituants non souhaités, par exemple Hg, SO₂, HCl et NOₓ, sont séparés dans diverses couches verticales d'adsorption et sont sortis de l'espace de réaction dans des courants séparés.

3. Procédé selon la revendication 1, caractérisé en ce que
dans au moins deux couches différentes d'adsorption, on utilise des agents différents d'adsorption, par exemple du coke de four à soie et du coke activé de houille.

4. Procédé selon la revendication 3, caractérisé en ce que
le gaz d'échappement traverse au moins deux couches différentes d'adsorption à des vitesses différentes d'écoulement.

5. Procédé selon la revendication 4, caractérisé en ce que
le même courant de gaz d'échappement est conduit en succession à travers les couches d'adsorption et les vitesses d'écoulement sont ajustées en mesurant les sur faces d'afflux affectées aux couches d'adsorption.

6. Procédé selon l'une des revendications 2 à 5, caractérisé en ce que
l'agent d'adsorption retiré dans lesdites couches est soumis à diverses étapes de traitement ultérieur.

7. Procédé selon l'une quelconque des revendications 1 à 6, caractérisé en ce que
l'espace de réaction est rempli et vidé par charges et en ce que le traitement du gaz d'échappement se produit dans au moins un lit fixe.

8. Procédé selon l'une quelconque des revendications 1 à 7, caractérisé en ce que
l'entonnoir d'évacuation et/ou les tubes d'évacuation qui s'y raccordent sont rincés ou chauffés par le gaz d'échappement.

9. Procédé selon l'une quelconque des revendications 1 à 8, caractérisé en ce que
dans une première couche d'adsorption, on sépare les métaux lourds, dans une deuxième couche d'adsorption, les composants gazeux faciles à adsorber, tels que SO₂ et HCl, du gaz d'échappement, et en ce que le gaz d'échappement est ensuite soumis à une réduction de NOₓ dans un autre étage de réaction.

10. Procédé selon l'une quelconque des revendications 1 à 9, caractérisé en ce que
une partie du gaz d'échappement est introduite du dessous, à travers l'entonnoir d'évacuation de l'agent d'adsorption, dans l'espace de réaction.

11. Utilisation du procédé selon l'une quelconque des revendications 1 à 10 pour le nettoyage des gaz de fumée dans des installations de combustion des ordures.

12. Dispositif pour la séparation de composants non souhaités d'un gaz d'échappement, avec un réacteur (4) délimitant au moins un espace de réaction (14) qui présente, du côté tête, un moyen d'introduction et du côté pied, un moyen d'évacuation en forme d'entonnoir pour l'introduction et l'évacuation d'un agent d'adsorption en morceaux ou en grains,
le moyen d'introduction est formé d'un quadrillage de plusieurs entonnoirs d'introduction (18) agencés côte à côte et les uns derrière les autres et le moyen d'évacuation est formé d'un autre quadrillage d'entonnoirs d'évacuation (20) agencés côte à côte et les unes derrière les autres et aussi bien au moins d'un côté qu'également dans la zone de tête de l'espace de réaction (14) sont prévues des entrées de gaz d'échappement.

13. Dispositif selon la revendication 12, caractérisé en ce que
l'espace de réaction (14) est divisé par au moins une rangée d'éléments séparateurs (17, 16) en au moins deux compartiments de réacteur (40, 41) essentiellement verticaux et passant transversalement à la direction de l'écoulement du gaz d'échappement et en ce que chaque compartiment de réacteur présente plusieurs entonnoirs d'introduction et d'évacuation (20) avec dispositifs d'obturation et/ou de dosage actionnables séparément (23, 27 et 24, 28).

14. Dispositif selon la revendication 13, caractérisé en ce que
les éléments séparateurs ont la forme de jalousies (16) ou de jalousies doubles (17).

15. Dispositif selon l'une quelconque des revendications 12 à 14, caractérisé en ce que
au moins deux chambres séparées de réaction (4, 5a ; 40, 41), qui peuvent être remplies et vidées indépendamment l'une de l'autre de l'agent d'adsorption, sont agencées près l'une de l'autre et sont placées l'une derrière l'autre pour le courant de gaz d'échappement.

16. Dispositif selon l'une quelconque des revendications 12 à 15, caractérisé en ce que
les entonnoirs d'évacuation (20) et/ou les tubes d'évacuation (21, 22) qui s'y raccordent sont agencés dans le trajet d'écoulement (32) du gaz d'échappement à nettoyer.

17. Dispositif selon la revendication 12, caractérisé en ce que
un canal (32) de gaz d'échappement est placé après la sortie de gaz d'échappement (31) d'un étage de réacteur (4) et est agencé dans son fond (9) de manière que les entonnoirs d'évacuation (20) et les tubes d'évacuation (21, 22) soient nettoyés par le gaz d'échappement tout en chauffant.

18. Dispositif selon l'une quelconque des revendications 12 à 17, caractérisé en ce que
le quadrillage d'entonnoirs (20) côté pied est pourvu d'ouvertures pour le passage du gaz d'échappement à nettoyer et en ce que les ouvertures sont reliées à l'entrée (2) de gaz d'échappement.

19. Dispositif selon l'une quelconque des revendications 12 à 18, caractérisé en ce que
l'entrée de gaz d'échappement (2) s'étend à peu près sur toute la hauteur de l'espace de réaction tandis que la sortie de gaz d'échappement (31) ne couvre qu'une hauteur limitée du côté sortie du réacteur (4) pour éviter des courts-circuits d'écoulement dans la zone de tête de l'espace de réaction.

20. Dispositif selon la revendication 17, caractérisé en ce que
un premier étage de réacteur (4) est flanqué, des deux côtés, de deux étages de réacteur (5a, 5b) et en ce que le courant de gaz d'échappement, étant retourné en dessous du fond (9) du premier étage de réacteur, est réparti en au moins deux courants partiels parallèles et est introduit dans les deux étages de réacteur (5a, 5b) flanquant le premier étage de réacteur (4).

21. Dispositif selon l'une quelconque des revendications 12 à 20, caractérisé en ce que
plusieurs rangées (18') d'entonnoirs d'introduction (18) sont agencées les unes derrière les autres à partir de l'entrée (2) de gaz d'échappement à des hauteurs échelonnées.

22. Dispositif pour la séparation de composants non souhaités d'un gaz d'échappement avec un réacteur (40') délimitant au moins un espace de réaction (44, 45), l'espace de réaction (44 ; 45) étant construit selon les revendications 12 à 19, caractérisé en ce que,
dans un boîtier cylindrique (41') sont agencés concentriquement au moins deux espaces annulaires de réaction (44, 45),
en ce que les deux espaces de réaction (44, 45) sont traversés essentiellement radialement par le courant de gaz d'échappement et sont placés en série pour le courant des gaz d'échappement et
en ce que la surface d'afflux du premier espace annulaire pour le courant de gaz d'échappement, en regardant dans la direction de l'écoulement, est plus grande que la surface d'afflux du second espace annulaire (45) pour le courant de gaz d'échappement en regardant en direction d'écoulement.

23. Dispositif selon la revendication 22, caractérisé en ce que
les surfaces d'afflux et de départ des deux espaces annulaires (44, 45) sont agencées de manière que les espaces annulaires soient traversés par le gaz d'échappement, essentiellement radialement de l'intérieur vers l'extérieur.

24. Dispositif selon la revendication 23, caractérisé en ce que
les premier et second espaces annulaires (44, 45) sont entoures de canaux annulaires de sortie de gaz d'échappement (46, 47), en ce que l'entrée de gaz d'échappement pour le premier espace annulaire (44) est également configurée comme un canal annulaire (48) et en ce que l'entrée de gaz d'échappement (48) du premier espace annulaire et l'entrée de gaz d'échappement (47) du second espace annulaire (45) sont séparées par une paroi intermédiaire cylindrique (51).

25. Dispositif selon la revendication 24, caractérisé en ce que le canal annulaire (46) formant la sortie de gaz d'échappement du premier espace annulaire (44) est délimité par la paroi externe du réacteur.

26. Dispositif selon l'une quelconque des revendications 22 à 25, caractérisé en ce que
une chambre circulaire d'écoulement (58), qui relie la sortie de gaz d'échappement (46) du premier espace annulaire (44) à l'entrée de gaz d'échappement (49) du second espace annulaire (45), est agencée sous les fonds d'évacuation (9) de manière que les entonnoirs d'évacuation (20) et/ou les tubes d'évacuation (22) soient rincés et chauffés par le gaz d'échappement partiellement nettoyé, s'écoulant radialement de l'extérieur vers l'intérieur.

27. Dispositif selon l'une quelconque des revendications 22 à 26, caractérisé en ce que
un canal d'entrée (52) en forme d'hélice est agencé dans la zone de tête du boîtier (41) du réacteur autour de son axe central (50) et est relié avec l'entrée de gaz d'échappement (47) du premier espace annulaire (44).

28. Dispositif selon l'une quelconque des revendications 22 à 27, caractérisé en ce que
les fonds d'introduction (8) et d'évacuation (9) sont de configuration annulaire et leurs entonnoirs (18, 20) sont en forme de trapèze.

29. Dispositif selon l'une quelconque des revendications 22 à 28, caractérisé en ce que
des chambres d'approvisionnement (61, 62) de forme annulaire sont agencées au-dessus des fonds d'introduction (8) de forme annulaire.

30. Dispositif selon la revendication 29, caractérisé en ce que
dans une chambre annulaire d'approvisionnement (62) est logé un dispositif de répartition continue (63) mû par moteur sur un axe de rotation correspondant à l'axe vertical (50) du boîtier.

31. Dispositif selon la revendication 29 ou 30, caractérisé en ce que
dans une paroi de plafond d'une chambre d'approvisionnement (61) de forme annulaire sont agencées, en étant réparties des ouvertures d'introduction de forme identique (68) à une distance identique autour de l'axe du boîtier (50) et en ce qu'une crémaillère (69) est agencée à une distance radiale correspondante au-dessus de la paroi de plafond.

32. Dispositif selon la revendication 31, caractérisé en ce que
un véhicule à rails se déplaçant sur la crémaillère (67) est pourvu de moyens pour un accostage avantageusement hermétique contre les ouvertures d'introduction (68), d'un espace de chargement pouvant être hermétiquement obturé et d'une soufflante pour la sollicitation par la pression de l'espace de chargement.
